# EUROPÄISCHE PATENTANMELDUNG

(11) **EP 0 824 105 A2**
(43) Veröffentlichungstag der Anmeldung: **18.02.1998**
(21) Anmeldenummer: 97113611.4
(22) Anmeldetag: 07.08.1997
(51) Int. Cl.: C08B 15/00, C08B 16/00, C08L 1/02

(54) **Celulosepartikel**

(30) Priorität: 12.08.1996 AT 1450/96
(71) Anmelder: LENZING AKTIENGESELLSCHAFT, 4860 Lenzing (AT)
(72) Erfinder: Schlangen, Jörg, 4840 Vöcklabruck (AT)

(57) **Zusammenfassung**

Die Erfindung betrifft ein Verfahren zur Herstellung von kationische und/oder anionische Gruppen aufweisenden Cellulosepartikeln, enthaltend die Schritte:
- Versetzen und Vermischen einer Viskose mit einem kationischen und/oder anionischen Polymer
- Ausfällen der Viskose in einem oder mehreren wäßrigen Fäll- bzw. Regenerationsbädern,
- Auswaschen der ausgefällten, regenerierten, kationische und/oder anionische Gruppen aufweisenden Cellulosepartikel.

Das Verfahren ist dadurch gekennzeichnet, daß zum Ausfällen der Viskose die Viskose durch eine Spinndüse (41) in ein Fällbad extrudiert wird und die frisch extrudierten Filamente unmittelbar nach dem Austritt aus der Spinndüse (41) vorzugsweise durch ein Rührwerk (42) zu Fibriden zerkleinert werden. Die Erfindung betrifft auch eine Vorrichtung (4) zur Durchführung des erfindungsgemäßen Verfahrens sowie Cellulosepartikel, welche durch das erfindungsgemäße Verfahren erhältlich sind.

## Beschreibung

Die Erfindung betrifft ein Verfahren zur Herstellung von kationische und/oder anionische Gruppen aufweisenden Cellulosepartikeln gemäß dem Oberbegriff des Anspruches 1, eine Vorrichtung zur Durchführung des Verfahrens sowie Cellulosepartikel, welche durch dieses Verfahren erhältlich sind.

Es ist bekannt, kationische bzw. anionische Gruppen aufweisende Cellulosepartikel dadurch herzustellen, daß man Lösungen der Cellulose oder von Derivaten der Cellulose, insbesondere alkalischen Lösungen des Cellulosexanthogenates (Viskose) kationische oder anionische Polymere zusetzt und aus der Lösung mittels bekannter Verfahren das Cellulosexanthogenat ausfällt und die Cellulose regeneriert. Solcherart hergestellte, kationische oder anionische bzw. auch gemischt kationisch-anionische Gruppen aufweisende Cellulosepartikel sind z.B. in den JP-A 2-274738, JP-A 52-26561, JP-A 3-54234 und JP-A 61-258801 beschrieben.

Es ist bekannt, daß solche Cellulosepartikel, insbesondere kationische Cellulosepartikel in Faserform eine verbesserte Anfärbbarkeit in bezug auf Säurefarbstoffe aufweisen. Weiters ist z.B. aus der JP-A 3-54234 bekannt, daß sich solcherart hergestellte Cellulosepartikel als Ionenaustauscher, zum Entfernen von Metallen aus Lösungen sowie als Flockungsmittel eignen.

In der PCT-WO 96/26220 wird beschrieben, daß durch die Zugabe eines Kationisierungsmittel zur Viskose Cellulosepartikel geschaffen werden, die über ihren gesamten Querschnitt verteilt an die Cellulose gebundene kationische Gruppen enthalten. Es wird weiters beschrieben, daß sich die Kationizität solcher Partikel bei einer Mahlung erhöht.

In der PCT-WO 96/26220 wird zum Ausfällen der kationisierten Cellulosepartikeln ein Fällungsmittel in die Mischlösung aus Viskose und kationischem Polymer zugerührt. Das ausgefällte Produkt wird als faserartig beschrieben.

Die in der JP-A 3-54234 beschriebenen kationisierten Cellulosepartikel werden zunächst in Faserform gewonnen und dann in 10-mm-Stückchen geschnitten. In diesem Dokument ist auch beschrieben, daß durch Zugabe eines anionischen Polymers zur Viskose zusätzliche anionische Gruppen aufweisende Cellulosepartikel erhalten werden. Auch diese Partikel werden zunächst in Faserform ausgefällt und dann z.B. in Teilchen von 0,1 mm Größe zerschnitten.

Das Schneiden von in Faserform vorliegenden Cellulosepartikeln ist jedoch mit einem großen apparativen Aufwand verbunden, insbesondere dann, wenn kleine Partikelgrößen gewünscht sind. Weiters ist insbesondere bei einem hohen Anteil des anionischen bzw. kationischen Polymers in der Viskose (20 Gew.% bis 50 Gew.% bezogen auf Cellulose) das Spinnen der Viskose zu regelmäßigen Filamenten, welche verstreckt und geschnitten werden können, nur erschwert möglich.

Die Aufgabe der vorliegenden Erfindung besteht demgemäß darin, ein Verfahren zur Verfügung zu stellen, bei welchem mit geringem apparativem Aufwand in zur Weiterverarbeitung geeigneter Form vorliegende kationische und/oder anionische Gruppen aufweisende Cellulosepartikel hergestellt werden können.

Diese Aufgabe wird durch ein Verfahren zur Herstellung von kationische und/oder anionische Gruppen aufweisenden Cellulosepartikeln, enthaltend die Schritte:
- Versetzen und Vermischen einer Viskose mit einem kationischen und/oder anionischen Polymer
- Ausfällen der Viskose in einem oder mehreren wäßrigen Fall- bzw. Regenerationsbädern,
- Auswaschen der ausgefällten, regenerierten, kationische und/oder anionische Gruppen aufweisenden Cellulosepartikel,
gelöst, welches dadurch gekennzeichnet ist, daß zum Ausfällen der Viskose die Viskose durch eine Spinndüse in ein Fällbad extrudiert wird und die frisch extrudierten Filamente unmittelbar nach dem Austritt aus der Spinndüse zu Fibriden zerkleinert werden.

Es ist mit diesem Verfahren in einfacher Weise möglich, gut weiterverarbeitbare Cellulosepartikel in Fibridform herzustellen. Nachdem die Filamente aus der Spinndüse extrudiert worden sind, werden sie unmittelbar nach dem Verlassen der Spinndüse zerkleinert. Dadurch entsteht eine gleichmäßige Suspension von fibridförmigen Cellulosepartikeln.

Das Verfahren ist auch bei hohen Anteilen des kationischen und/oder anionischen Polymers in der Viskose hervorragend anwendbar.

Die Fibride haben dabei eine durchschnittliche Größe von 1 mm bis 20 mm. Um Cellulosepartikel dieser Größe durch das Schneiden von Cellulosefilamenten herstellen zu können, ist ein vergleichsweise viel größerer Aufwand notwendig.

Für die Produktbeschaffenheit hat es sich als wichtig herausgestellt, in welchem Abstand die Zerkleinerungsvorrichtung zur Düse steht. Je kleiner der Abstand ist, um so feiner wird das erzeugte Produkt und dies hat Vorteile bei der weiteren Verarbeitung.

Die Suspension von fibridförmigen Cellulosepartikeln kann aufgeschwemmt und in herkömmlicher Weise gewaschen und weiterbehandelt werden.

Eine bevorzugte Ausführungsform des erfindungsgemäßen Verfahrens besteht darin, daß die frisch extrudierten Filamente durch ein Rührwerk zu Fibriden zerkleinert werden.

Die Zerkleinerung der Filamente zu Fibriden durch ein Rührwerk stellt eine besonders wirkungsvolle und trotzdem apparativ besonders einfach zu gestaltende Ausführungsform des erfindungsgemäßen Verfahrens dar. Durch die rasche Drehung des Rührwerkes werden die Filamente zerrissen und in sehr gleichförmiger Weise zerkleinert.

Besonders vorteilhaft erweist es sich dabei, wenn das Rührwerk eine turbulente Strömung erzeugt. Dadurch wird die Zerkleinerung der Filamente noch effektiver und gleichmäßiger.

Eine weitere bevorzugte Ausführungsform des erfindungsgemäßen Verfahrens ist dadurch gekennzeichnet, daß die Viskose durch eine Spinndüse extrudiert wird, deren Spinnlöcher einen Durchmesser von 200 µm bis 1000 µm, vorzugsweise 400 µm bis 600 µm, besonders bevorzugt 500 µm aufweisen.

Es hat sich gezeigt, daß die Extrusion der Viskose durch Spinnlöcher mit einem im Vergleich zum Herstellungsverfahren von Viskosestapel- oder -filamentfasern großen Durchmesser zu Cellulosepartikeln mit besonders guten Eigenschaften führt, insbesondere wenn die extrudierten Filamente unmittelbar nach dem Verlassen der Spinndüse zerkleinert werden. Dies gilt insbesondere bei höheren Anteilen des kationischen bzw. anionischen Polymers.

Das erfindungsgemäße Verfahren eignet sich in hervorragender Weise auch für eine kontinuierliche Verfahrensführung der Herstellung von kationische und/oder anionische Gruppen enthaltenden Cellulosepartikel.

Zur Weiterbehandlung der erfindungsgemäß hergestellten Cellulosepartikel erweist es sich als besonders vorteilhaft, wenn die in Fibridform vorliegenden ausgewaschenen Cellulosepartikel auf einen Feuchtigkeitsgehalt von 75 Masse-% bis 90 Masse-% abgepreßt werden.

Das Abpressen kann nach herkömmlichen für diesen Zweck bekannten Methoden erfolgen. Mit einem Feuchtigkeitsgehalt von 75 Masse-% bis 90 Masse-% können die hergestellten kationische und/oder anionische Gruppen aufweisenden Cellulosepartikel für die entsprechenden Verwendungen weiterbehandelt, z.B. weiter zerkleinert werden.

Eine Vorrichtung zur Durchführung des erfindungsgemäßen Verfahrens besteht aus einem mit Fällbad gefüllten Behälter, einer in das Fällbad eintauchenden Spinndüse und einem unmittelbar nach den Austrittsöffnungen der Spinndüsenlöcher angeordneten Rührwerk.

Diese Vorrichtung kann sehr einfach und kostengünstig erstellt werden und gestattet eine effektive Durchführung des erfinderischen Verfahrens.

Das Rührwerk kann so nahe wie möglich an den Austrittsöffnungen der Spinndüsenlöcher angeordnet sein. Allerdings ist dabei zu beachten, daß durch die Vibration des Rührwerkes keine Beeinträchtigung der Extrusion erfolgt. Mit der Bezeichnung "unmittelbar" ist somit jene Entfernung des Rührwerkes zur Spinndüse gemeint, bei welcher die extrudierten Filamente so schnell wie möglich nach der Extrusion zerkleinert werden, aber die Extrusion noch störungsfrei erfolgen kann.

Eine bevorzugte Ausführungsform der erfindungsgemäßen Vorrichtung besteht darin, daß der Behälter senkrecht stehend ausgebildet ist, daß die durch die Austrittsöffnungen der Spinndüsenlöcher gebildete Fläche im wesentlichen parallel zum Boden des Behälters angeordnet ist und daß das Rührwerk oberhalb der Spinndüse angeordnet ist.

Das Rührwerk kann dabei parallel zur Achse des Behälters angeordnet sein oder auch einen Winkel zur Achse des Behälters aufweisen.

Bei dieser Ausführungsform werden somit die Filamente senkrecht nach oben extrudiert und unmittelbar oberhalb der Spinndüse durch das Rührwerk verwirbelt. Die entstehende Suspension von fibridförmigen Cellulosepartikeln kann am oberen Ende des Behälters kontinuierlich abgezogen und der Nachbehandlung zugeführt werden. Die Verweilzeit der gefällten Cellulosepartikel im Behälter beträgt dabei typischerweise ca. 8 Minuten.

Der Abstand des Rührwerkes von der Oberfläche, d.h. den Austrittsöffnungen der Spinndüse beträgt in bevorzugter Weise 15 mm bis 50 mm, vorzugsweise 20 mm bis 30 mm. Bei diesen Abständen ist die oben erwähnte schnelle Zerkleinerung der Filamente ohne Beeinträchtigung der Extrusion besonders gut möglich.

Die Spinnlöcher der Spinndüse weisen, wie schon oben aufgeführt, bevorzugt einen Durchmesser von 200 µm bis 1000 µm, vorzugsweise 400 µm bis 600 µm, besonders bevorzugt 500 µm, auf.

Gegenstand der vorliegenden Erfindung sind weiters fibridförmige Cellulosepartikel, welche nach dem erfindungsgemäßen Verfahren erhältlich sind.

Das erfindungsgemäße Verfahren wird anhand des nachstehenden Ausführungsbeispieles und der Figuren näher erläutert.

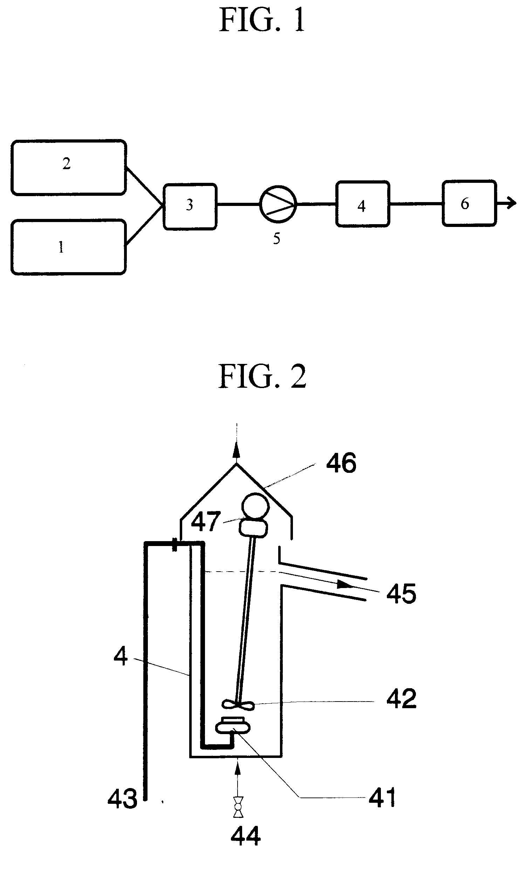

Dabei zeigt Fig. 1 schematisch den allgemeinen Ablauf des erfindungsgemäßen Verfahrens und Fig. 2 eine Ansicht einer bevorzugten Vorrichtung zur Durchführung des Verfahrens.

Das kationische oder anionische Polymer (in Form einer Suspension oder Lösung) wird aus dem Vorratsbehälter (1) der aus dem Vorratsbehälter (2) kommenden Celluloselösung (Viskose) zugesetzt. Das entstandene Gemisch wird in die unmittelbar anschließende Mischvorrichtung (3) gepumpt. In der Mischvorrichtung wird der eintretende Strom der Mischkomponenten sofort in mehrere Teilströme aufgeteilt und somit homogen vermischt.

Zur homogenen Mischung besonders geeignet ist dabei eine Mischvorrichtung mit einem Einlaß für das zu mischende Gemenge, einem Auslaß für das gemischte Gemenge, parallel zueinander angeordneten scheibenförmig ausgebildeten Stator- und Rotorelementen, auf der Oberfläche der Stator- bzw. der Rotorscheibe angebrachten Elementen, welche als Rührwerkzeuge und Strombrecher dienen und Durchtrittsöffnungen für den Durchtritt des zu mischenden Gemenges. Vorzugsweise sind die auf der Oberfläche der Stator-bzw. der Rotorscheibe angebrachten Elemente zylinderförmige, senkrecht auf die Oberfläche der Stator-bzw. Rotorscheibe angeordnete Stifte. Die in das Gemisch gleichmäßig eingetragene Mischenergie beträgt 4 kJ/kg bis 20 kJ/kg Gemisch, vorzugsweise 8 kJ/kg bis 12 kJ/kg Gemisch.

Die homogene Mischung wird zu einer Fällvorrichtung (4) transportiert, in der die Mischung mit einem Nichtlösungsmittel für die Cellulosepartikel in Kontakt gebracht wird und diese somit ausgefällt werden. Der für den Transport der Mischung in die Fällvorrichtung nötige Druck kann, falls erforderlich, mittels einer Zahnradpumpe (5) erzielt werden (abhängig von der Viskosität). Nach der Wäsche (6) werden die erhaltenen Cellulosepartikel auf einen Feuchtigkeitsgehalt von 75 Masse-% bis 90 Masse-% abgepreßt und können in die für den jeweiligen Einsatzzweck geeignete Form übergeführt werden.

Eine bevorzugte Ausführungsform einer Vorrichtung zur Durchführung des erfindungsgemäßen Verfahrens ist in Fig. 2 schematisch illustriert. Sie besteht aus einem im wesentlichen senkrecht stehenden Fällbehälter (4), welcher mit Fällbad bis zur Höhe eines Auslasses (45) gefüllt ist. Das Fällbad wird dem Behälter über die Leitung (44) zugeführt. Im unteren Bereich des Fällbehälters (4) ist eine Spinndüse (41) angeordnet, welche über eine Zulaufleitung (43) mit dem Viskose-Polymer-Gemisch gespeist wird. Unmittelbar oberhalb der Spinndüse (41) befindet sich das Rührwerk (42), welches über einen externen Motor (47) angetrieben wird. Das Rührwerk (42) kann zur Achse des Fällbehälters (4) leicht geneigt sein. Oberhalb des Fällbehälters (4) befindet sich eine Einrichtung (46) zur Absaugung.

Bei der Durchführung des erfinderischen Verfahrens wird die das kationische und/oder Polymer enthaltende und durchgemischte Viskose durch die Spinndüse (41) extrudiert und direkt unmittelbar oberhalb der Spinndüse (41) durch das Rührwerk (42) zu Fibriden zerwirbelt. Die entstehende Fibridsuspension wird beim Auslaß (45) kontinuierlich abgezogen und der Wäsche und Nachbehandlung zugeführt.

### Ausführungsbeispiel:

Eine Standardviskose wurde mit einer 17%-igen wäßrigen Lösung von Poly-diallyl-dimethylammoniumchlorid (Poly-DADMAC) in einer Menge von 20 Masse-% Poly-DADMAC bezogen auf Cellulose versetzt.

Das Gemenge wurde unmittelbar danach in einer Mischvorrichtung mit Rotor und Stator wie oben beschrieben bei einer Drehzahl des Rotors von ca. 800 U/min vermischt. Dabei wurde eine Mischenergie von 8,2 kJ/kg Gemisch gleichmäßig eingetragen.

Die erhaltene homogene Spinnmasse wurde in einer Anordnung gemäß Figur 2 über eine Spinndüse (650 Spinnlöcher mit einem Lochdurchmesser von 500 µm) in ein in einem Behälter befindliches wäßriges Fällbad mit 20 g/l H₂SO₄ extrudiert und unmittelbar nach Austritt aus der Spinndüse im Fällbad mit einem Rührwerk (Fa. Fluid-Ekato, Type RD.35 12 A) verwirbelt, welches einen Abstand von 30 mm zur Spinndüse aufwies, sodaß Fibride mit einer Länge von ca. 5-10 mm erhalten wurden. Die erhaltene Suspension von fibridförmigen Cellulosepartikeln wurde am oberen Ende des Behälters abgezogen. Die Cellulosepartikel wurden zur Vervollständigung der Regeneration der Cellulose und zum Auswaschen mit Wasser gewaschen und auf eine Feuchte von ca. 80 Masse-% abgepreßt.

Die erhaltenen kationische Gruppen aufweisenden feuchten Cellulosepartikel wurden mittels einer Mahltrocknung gleichzeitig gemahlen und getrocknet. Die erhaltenen Produkte wiesen hervorragende Eigenschaften für zahlreiche Anwendungsgebiete auf.

## Patentansprüche

1. Verfahren zur Herstellung von kationische und/oder anionische Gruppen aufweisenden Cellulosepartikeln, enthaltend die Schritte:
• Versetzen und Vermischen einer Viskose mit einem kationischen und/oder anionischen Polymer
• Ausfällen der Viskose in einem oder mehreren wäßrigen Fäll- bzw. Regenerationsbädern,
• Auswaschen der ausgefällten, regenerierten, kationische und/oder anionische Gruppen aufweisenden Cellulosepartikel,
dadurch gekennzeichnet, daß zum Ausfällen der Viskose die Viskose durch eine Spinndüse in ein Fällbad extrudiert wird und die frisch extrudierten Filamente unmittelbar nach dem Austritt aus der Spinndüse zu Fibriden zerkleinert werden.

2. Verfahren nach Anspruch 1, dadurch gekennzeichnet, daß die frisch extrudierten Filamente durch ein Rührwerk zu Fibriden zerkleinert werden.

3. Verfahren nach Anspruch 2, dadurch gekennzeichnet, daß das Rührwerk eine turbulente Strömung erzeugt.

4. Verfahren gemäß einem der vorhergehenden Ansprüche, dadurch gekennzeichnet, daß die Viskose durch eine Spinndüse extrudiert wird, deren Spinnlöcher einen Durchmesser von 200 µm bis 1000 µm, vorzugsweise 400 µm bis 600 µm, besonders bevorzugt 500 µm aufweisen.

5. Verfahren nach einem der vorhergehenden Ansprüche, dadurch gekennzeichnet, daß die in Fibridform vorliegenden ausgewaschenen Cellulosepartikel auf einen Feuchtigkeitsgehalt von 75 Masse-% bis 90 Masse-% abgepreßt werden.

6. Vorrichtung (4) zur Durchführung des Verfahrens gemäß Anspruch 1 bis 5, bestehend aus einem mit Fällbad gefüllten Behälter (4), einer in das Fällbad eintauchenden Spinndüse (41) und einem unmittelbar nach den Austrittsöffnungen der Spinndüsenlöcher angeordneten Rührwerk (42).

7. Vorrichtung nach Anspruch 6, dadurch gekennzeichnet, daß der Behälter (4) senkrecht stehend ausgebildet ist, daß die durch die Austrittsöffnungen der Spinndüsenlöcher (41) gebildete Fläche im wesentlichen parallel zum Boden des Behälters (4) angeordnet ist und daß das Rührwerk (42) oberhalb der Spinndüse (41) angeordnet ist.

8. Vorrichtung nach einem der Ansprüche 6 oder 7, dadurch gekennzeichnet, daß das Rührwerk (42) von der Austrittsöffnung der Spinndüsenlöcher (41) einen Abstand von 15 mm bis 50 mm, vorzugsweise 20 mm bis 30 mm, aufweist.

9. Vorrichtung nach einem der Ansprüche 6 bis 8, dadurch gekennzeichnet, daß die Spinnlöcher der Spinndüse (41) einen Durchmesser von 200 µm bis 1000 µm, vorzugsweise 400 µm bis 600 µm, besonders bevorzugt 500 µm aufweisen.

10. Fibridförmige Cellulosepartikel, erhältlich nach einem Verfahren gemäß einem der Ansprüche 1 bis 5.
